# EUROPÄISCHE PATENTSCHRIFT

(11) **EP 0 700 832 B1**
(45) Veröffentlichungstag und Bekanntmachung des Hinweises auf die Patenterteilung: **26.04.2000**
(21) Anmeldenummer: 95113210.9
(22) Anmeldetag: 23.08.1995
(51) Int. Cl.: B65B 35/44, B65G 17/32

(54) **Vorrichtung zum Gruppieren von Beuteln**
Device for forming groups of bags
Appareil pour grouper des sachets

(30) Priorität: 07.09.1994 DE 4431866; 22.06.1995 DE 19522688; 29.06.1995 DE 19523752
(43) Veröffentlichungstag der Anmeldung: 13.03.1996
(73) Patentinhaber: Hans Paal KG, Maschinenbau (GmbH & Co), 73630 Remshalden (DE)
(72) Erfinder: Jaudes, Theodor, D-71364 Winnenden (DE)
(74) Vertreter: Patentanwälte Bartels und Partner

(56) Entgegenhaltungen:
- EP-A- 0 250 190
- EP-A- 0 551 613
- DE-A- 4 022 349
- GB-A- 1 346 407
- US-A- 2 667 958

## Beschreibung

Die Erfindung betrifft eine Vorrichtung zum Gruppieren von Waren enthaltenden Beuteln, welche die Merkmale des Oberbegriffs des Anspruches 1 aufweist.

Die EP 0 250 190 zeigt eine Vorrichtung zum Gruppieren von eine Ware enthaltenden Beuteln, beispielsweise von Teebeuteln, bei der die Beutel in horizontaler Lage nacheinander in einzelne Fächer eines Transportbandes eingeschoben werden, die durch in Laufrichtung des Transportbandes aufeinanderfolgende Querwände aus einem plastischen Kunststoff gebildet sind. Anschließend werden die Beutel durch das Transportband transportiert und oberhalb eines zu beladenden Kartons positioniert. Während des Transports werden die Beutel dabei durch Winkelführungsschienen an einem Herausfallen aus den Fächern gehindert. Durch eine von oberhalb des Transportbandes nach unten in Richtung des aufnehmenden Kartons wirkende Auswurfeinrichtung wird eine Gruppe von Beuteln abschießend in den Karton eingesetzt.

Bei einer weiteren bekannten Vorrichtung dieser Art (DE 40 22 349 A1), die zur Stapelbildung von Briefen, Zeitungen, Zeitschriften, Faltblättern, Karten, aber auch von Filmtüten und dergleichen dient, stehen zwar die auf der Abstellfläche der Sammeleinrichtung abgestellten Teile unter einem gewissen Druck in Längsrichtung des Stapels. Während der Zufuhr zu der Sammeleinrichtung liegen die zu gruppierenden Gegenstände aber lose in den Fächern des Transportbandes. Würde eine solche Vorrichtung zur Gruppierung von Beuteln verwendet, welche eine aus Einzelteilen bestehende Ware enthalten, beispielsweise Bonbons, dann würde sich die Ware auch dann, wenn sie beim Einführen der Beutel in die Fächer gleichmäßig im Beutel verteilt ist, vor Übergabe der Beutel an die Sammeleinrichtung im unteren Teil des Beutels sammeln, weil das Transportband von oben nach unten verlaufend an der Abstellfläche vorbeigeführt ist, um die Beutel stehend an die Sammeleinrichtung übergeben zu können.

Da bei der Gruppierung von Beuteln, deren aus Einzelteilen bestehende Ware möglichst gleichmäßig im Beutel verteilt sein soll, eine solche Ansammlung der Ware im unteren Teil des Beutels vor der Übergabe an die Sammeleinrichtung störend ist, liegt der Erfindung die Aufgabe zugrunde, eine Vorrichtung zur Gruppierung von Beuteln zu schaffen, bei der die gleichmäßige Verteilung der in den Beuteln enthaltenen Ware auch nach der Übergabe der Beutel an die Sammeleinrichtung aufrechterhalten wird. Die Aufgabe löst eine Vorrichtung mit den Merkmalen des Anspruches 1.

Die erfindungsgemäße Ausbildung der Fächer stellt sicher, daß die Beutel problemlos in die Fächer eingeführt werden können, und zwar auch dann, wenn ihre Dicke den Sollwert überschreitet, weil bei einem zu dicken Beutel dieser die federnden Querwände im erforderlichen Maße auseinanderdrücken kann. Die Spannung, welche dabei die Querwände erhalten, erzeugt auf den Beutel einen Druck, welcher eine gleichmäßigere Verteilung der Ware im Beutel begünstigt und dadurch die Beuteldicke wieder auf den Sollwert reduziert. Außerdem wird durch die erfindungsgemäßen Querwände erreicht, daß dann, wenn die Beutel stehend der Sammeleinrichtung zugeführt werden, die Ware daran gehindert wird, sich im unteren Teil des Beutels anzusammeln.

Auch eine ordnungsgemäße Übergabe aller Beutel an die Sammeleinrichtung ist durch die erfindungsgemäße Vorrichtung sichergestellt. Schon beim Transport der Beutel zu der Sammeleinrichtung ist durch die Fächer des Transportbandes, welche die Beutel aufnehmen, sichergestellt, daß alle Beutel zwangsläufig mit der gleichen Geschwindigkeit transportiert werden, da sie voneinander durch die Querwände getrennt sind. Durch diese Querwände ist aber außerdem gewährleistet, daß alle Beutel, unabhängig von ihrer Form und gegebenenfalls von Unebenheiten, auf der Abstellfläche ordnungsgemäß abgestellt werden, auch wenn auf die Beutel während der Bildung der Gruppe ein Druck in Gruppenlängsrichtung ausgeübt wird, wie dies erforderlich ist, um auch während der Gruppenbildung zu verhindern, daß sich die in den Beuteln enthaltene Ware im unteren Bereich des Beutels ansammelt. Jeder Beutel ist nämlich von dem vorausgehenden, bereits auf der Abstellfläche abgestellten Beutel so lange durch die Querwand getrennt, bis er selbst auf der Abstellfläche abgestellt ist. Erst dann wird die Querwand relativ zu den auf der Abstellfläche stehenden Beuteln vom Transportband nach unten bewegt, bis sie vollständig aus der Gruppe herausgezogen ist.

Um einerseits das endlose Transportband problemlos längs der gewünschten Bahn führen und andererseits die Querwände an ihm in einfacher Weise festlegen zu können, weist vorteilhafterweise das Transportband eine Gliederkette auf, an deren Glieder Halter für die Querwände festgelegt sind. Bei der Gliederkette kann es sich beispielsweise um eine Rollenkette handeln. Sofern die Querwände durch blattfederartige Zungen gebildet sind, weisen die Halter vorzugsweise eine Klemmvorrichtung auf, in die das eine Zungenende eingeklemmt werden kann.

Wenn die Beutel auf einem Förderband liegend dem Transportband zugeführt werden, was einen geringen Aufwand erfordert und störunanfällig ist, kann das Einbringen der Beutel in die Fächer ohne Schwierigkeiten erfolgen, wenn im Übernahmebereich das Transportband so geführt wird, daß die Querwände zumindest ungefähr parallel zum Förderband verlaufen und damit je einer der Beutel zwischen zwei benachbarte Querwände von deren freiem Ende her eingeführt werden kann. Dieses Einführen kann vor allem dann sehr zuverlässig erfolgen, wenn die Beutel auf zwei im Abstand voneinander verlaufenden Förderbändern liegen und das Transportband im Übernahmebereich zwischen diesen beiden Förderbändern hindurchgeführt ist, da dann die Beutel in die Fächer bis zum Anschlag am Transportband oder einem der an diesem vorgesehenen Halter transportiert werden können.

Die Querwände schließen vorzugsweise einen spitzen, sich entgegen der Laufrichtung öffnenden Winkel mit dem Transportband ein. In dem die beiden Abstellzonen der Abstellfläche kreuzenden Abschnitt ist dann der Verlauf des Transportbandes vorteilhafterweise so gewählt, daß die Querwände zumindest annähernd einen rechten Winkel mit den Abstellzonen einschließen. Die Beutel werden hierdurch lotrecht auf den Abstellzonen abgestellt. Außerdem können die Querwände problemlos nach unten aus dem Gruppenende herausbewegt werden.

Bei einer bevorzugten Ausführungsform ist die Abstellfläche der Sammeleinrichtung unter Freilassung einer Mittelzone in zwei nebeneinander angeordnete Abstellzonen unterteilt, auf denen die Beutel von der Aufsetzstelle wegbe wegbar sind. Das Transportband kann dann die Abstellfläche kreuzen und von oben nach unten durch die Mittelzone hindurchgeführt werden.

Um während der Gruppenbildung in einfacher Weise die Beutel mit einem gewissen Druck in Anlage aneinander zu halten, weist bei einer bevorzugten Ausführungsform die Sammeleinrichtung einen Anschlag mit einer Anlagefläche für den ersten Beutel jeder Gruppe auf, der in Richtung der Gruppenlänge unter Überwindung einer hemmenden Kraft von der Gruppe verschiebbar ist. Vorteilhafterweise wird jeder vorhandene Anschlag aus zwei Anschlagfingern gebildet, die an zwei zu beiden Seiten des für den Durchtritt des Transportbandes benötigten Freiraumes vorgesehenen endlosen Bändern, Ketten oder dgl. abstehen. Bei einer bevorzugten Ausführungsform bilden die beiden Bänder je eine der beiden Abstellzonen der Sammeleinrichtung.

Bei einer bevorzugten Ausführungsform weist die Sammeleinrichtung wenigstens einen Mitnehmer auf, der sich an das hintere Ende jeder vollständig gebildeten Gruppe anlegt und diese unter Bildung eines Zwischenraumes zur folgenden Gruppe in der Gruppenlängsrichtung verschiebt. Vorteilhafterweise wird jeder dieser Mitnehmer durch zwei Mitnehmerfinger gebildet, die an zwei synchron angetriebenen endlosen Förderelementen angeordnet sind, welche neben den beiden die Anschlagfinger tragenden endlosen Bändern oder dgl. verlaufen. Bei diesen Förderelementen kann es sich ebenfalls um Bänder oder dgl. handeln.

Wenn sowohl die Anschlagelemente als auch die als Schubelemente ausgebildeten Mitnehmer von unten her zwischen die ankommenden Beutel eingeschwenkt werden, ist für ein störungsfreies Zusammenarbeiten der Anschlagelemente und der Schubelemente mit den Beuteln ein gewisser Aufwand erforderlich.

Bei einer bevorzugten Ausführungsform werden daher sowohl die Anschlagelemente als auch jedes vorhandene Schubelement von dem der Stellfläche abgewandten Beutelrand her zwischen die Beutel eingeführt, tauchen also ähnlich wie ein Paddel zwischen die aufeinanderfolgenden Beutel ein. Die erforderliche Führung der Elemente läßt sich mit einfachen Mitteln realisieren.

Damit kontinuierlich die Beutel der Sammeleinrichtung zugeführt werden können, ist diese bei einer bevorzugten Ausführungsform so ausgebildet, daß jeweils ein Anschlagelement und ein Schubelement gemeinsam zwischen zwei aufeinanderfolgende Beutel eingeführt werden. Das Schubelement, das sich dabei an den letzten Beutel des gebildeten Stapels anlegt, kann dann den Stapel mit erhöhter Transportgeschwindigkeit in diejenige Position schieben, in welcher der Stapel für die weitere Bearbeitung, beispielsweise eine Verpackung, von der Sammeleinrichtung als Ganzes entfernt wird.

Die Anschlagelemente können alle an einer ersten sich längs einer in sich geschlossenen Bahn verlaufenden Transporteinrichtung angeordnet sein. Dasselbe gilt für das Schubelement oder die Schubelemente. In der Regel ist jedoch ein einziges Schubelement ausreichend.

Bei einer bevorzugten Ausführungsform sind die Elemente stehend an der zugehörigen Transporteinrichtung angeordnet. Die Transporteinrichtungen weisen dann einen ersten Abschnitt auf, der sich längs der Stellfläche erstreckt, sowie einen zweiten Abschnitt, der parallel zur Stellfläche im Abstand oberhalb dieser verläuft, wobei der Abstand größer ist als die Höhe der auf der Stellfläche abgestellten Beutel. Für das Einführen der Elemente zwischen zwei aufeinanderfolgende, fortlaufend der Sammeleinrichtung zugeführte Beutel ist ein dritter Abschnitt jeder Transporteinrichtung vorzugsweise so geführt, daß er außer einer Komponente seiner Transportrichtung lotrecht gegen die Stellfläche eine Komponente in der Bewegungsrichtung der Beutel auf der Stellfläche aufweist. Vorteilhaft, weil einfach, sind endlose Bänder und/oder Ketten zur Realisierung der Transporteinrichtungen.

Bei einer bevorzugten Ausführungsform sind sowohl die Anschlagelemente als auch jedes vorhandene Schubelement als Platte ausgebildet, um sicherzustellen, daß die Beutel während der Bewegung auf der Stellfläche flach gehalten werden, also die in ihnen enthaltene Ware sich nicht in dem unteren, auf der Stellfläche stehenden Teil ansammelt.

Im folgenden ist die die Erfindung anhand zweier in der Zeichnung dargestellten Ausführungsbeispiele im einzelnen erläutert. Es zeigen
- Fig. 1: eine schematisch dargestellte Seitenansicht des ersten Ausführungsbeispiels,
- Fig. 2: einen vergrößert dargestellten Ausschnitt aus Fig. 1,
- Fig. 3: eine perspektivisch dargestellte Teilanschicht des ersten Ausführungsbeispiels,
- Fig. 4: das zweite Ausführungsbeispiel in schematisch dargestellter Seitenansicht zum Zeitpunkt des Beginns der Entnahme eines vollständigen Stapels und dem Beginn der Bildung des folgenden Stapels,
- Fig. 5: das zweite Ausführungsbeispiel zu einem Zeitpunkt während der Entnahme des vollständigen Stapels und der Bildung des nächsten Stapels,
- Fig. 6: das zweite Ausführungsbeispiel zum Zeitpunkt kurz vor Beendigung der Entnahme des fertigen Stapels,
- Fig. 7: das zweite Ausführungsbeispiel nach beendeter Entnahme des fertigen Stapels und noch nicht vollendeter Bildung des folgenden Stapels,
- Fig. 8: das zweite Ausführungsbeispiel zum Zeitpunkt der Annäherung seiner schiebenden Platte an eine der geschobenen Platten vor deren Rückführung,
- Fig. 9: das zweite Ausführungsbeispiel zum Zeitpunkt der Zusammenführung der schiebenden Platte und einer der geschobenen Platten vor dem Absenken gegen die Sammeleinrichtung hin,
- Fig. 10: das zweite Ausführungsbeispiel zum Zeitpunkt während des Einführens der schiebenden Platte und einer der geschobenen Platten zwischen zwei aufeinanderfolgende Beutel, ehe der letzte Beutel an den Stapel angelegt wird,
- Fig. 11: das zweite Ausführungsbeispiel zum Zeitpunkt der Beendigung der Bildung des Stapels vor dessen Trennung von der geschobenen Platte des als nächsten zu bildenden Stapels.

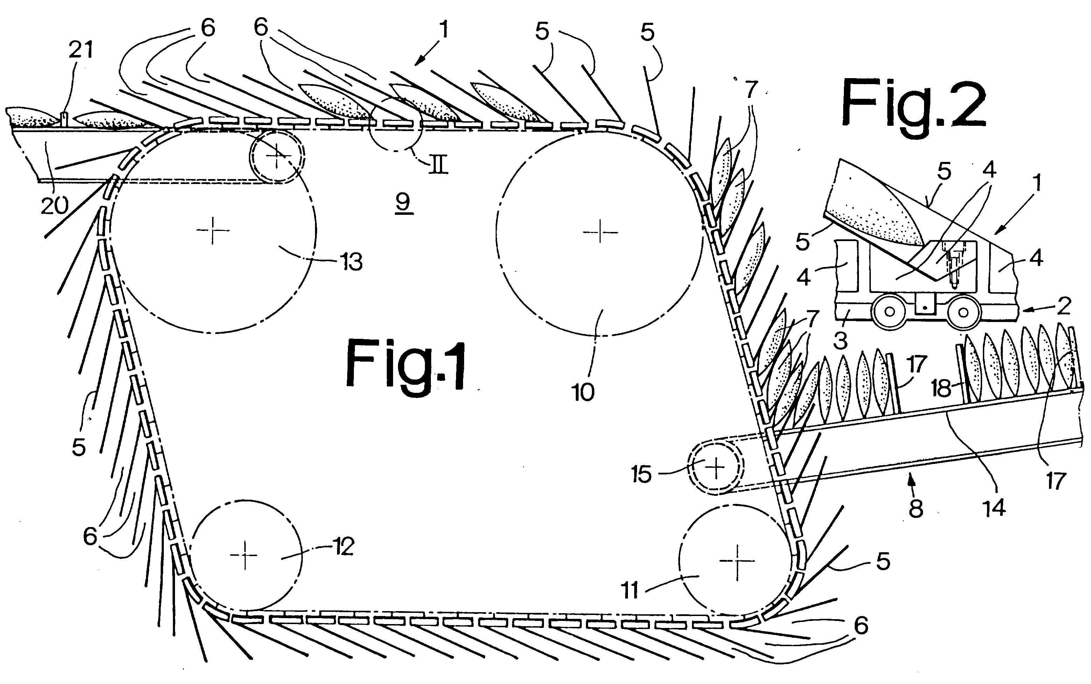

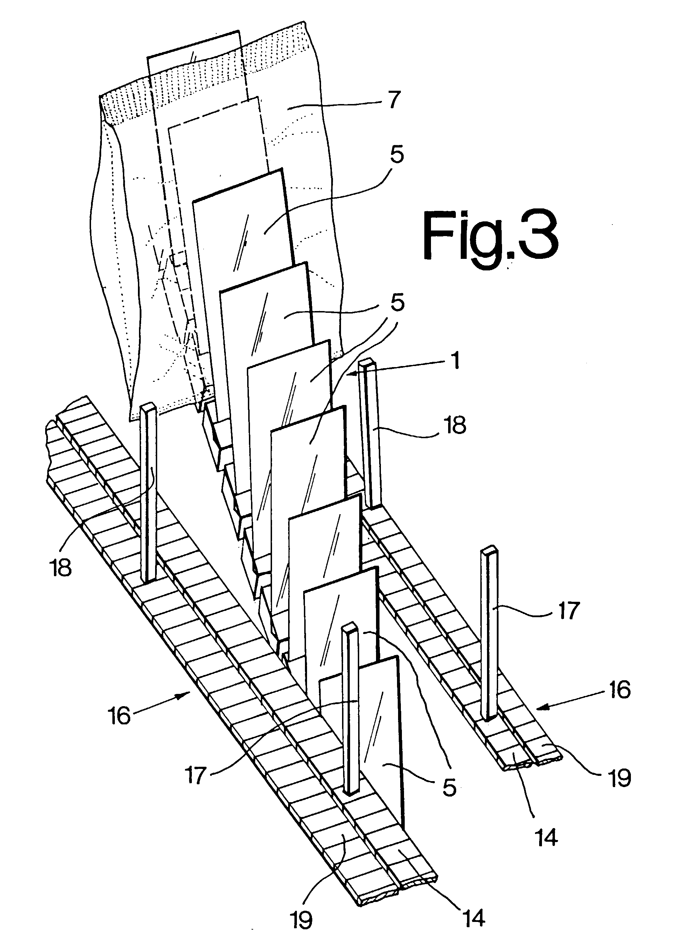

Die das erste Ausführungsbeispiel bildende Vorrichtung zur Gruppierung von eine Ware enthaltenden Beuteln oder dergleichen weist ein endloses, als Ganzes mit 1 bezeichnetes Transportband mit einer Rollenkette 2 auf. Wie Fig. 2 zeigt, sind an den die aufeinander folgenden Rollen verbindenden Wangen 3 der Rollenkette 2 Halter 4 befestigt, und zwar auf der nach außen weisenden Seite der Rollenkette 2. Bei diesen Haltern 4 handelt es sich im Ausführungsbeispiel um gleich ausgebildete, blockförmige Klemmvorrichtungen. In jeder dieser Klemmvorrichtungen ist das eine schmalseitige Ende je einer rechteckförmigen Querwand 5 aus einem dünnen, federnden Material festgeklemmt. Die Querwände 5 haben die Form von Zungen, welche in Richtung der Rollenkette 2 vom jeweiligen Halter 4 unter Bildung eines spitzen Winkels mit der Rollenkette 2 abstehen, wobei der Winkel sich entgegen der Laufrichtung des Transportbandes 1 öffnet. Wie insbesondere Fig. 1 zeigt, bilden die Querwände 5 in Längsrichtung des Transportbandes 1 aufeinander folgende Fächer 6 mit einer dem Sollwert der Dicke der Beutel 7 entsprechenden Weite zur Aufnahme je eines der zu gruppierenden Beutel 7. Die Abmessung der Querwände 5 in Querrichtung ist wesentlich kleiner als die entsprechende Abmessung der Beutel 7, so daß diese seitlich nennenswert über die Querwände 5 überstehen, wie dies in Fig. 3 angedeutet ist. Die Höhe der Querwände 5 ist zumindest gleich der halben Höhe der Beutel 7. Im Ausführungsbeispiel ist sie etwa gleich der Höhe der Beutel 7. Die federnden Querwände 5 stellen sicher, daß sich die im Beutel 7 enthaltende Ware nicht im unteren Beutelbereich ansammeln kann, wenn die Beutel 7 in eine stehende Lage kommen.

Die Bahn, längs deren das Transportband 1 geführt ist, weist im Ausführungsbeispiel einen oberen horizontalen Abschnitt auf, in dem sich bei einer Blickrichtung gemäß Fig. 1 das Transportband 1 von links nach rechts bewegt, wobei es auf einem Stützkörper 9 aus einem Material mit guten Gleiteigenschaften aufliegt. Über ein erstes Umlenkrad 10 schließt sich an den oberen horizontalen Abschnitt ein schräg nach unten verlaufender, geradliniger Abschnitt an, dessen Neigung so gewählt ist, daß die sich in diesem Abschnitt befindenden Querwände 5 zumindest annähernd lotrecht zu der Abstellfläche einer als Ganzes mit 8 bezeichneten Sammeleinrichtung verlaufen, auf welcher die Gruppen gebildet werden. Unterhalb der Sammeleinrichtung 8 ist ein zweites Umlenkrad 11 angeordnet, das im Ausführungsbeispiel von einem Motor angetrieben ist und mit seinen Zähnen in die Rollenkette 2 eingreift. Zwischen dem zweiten Umlenkrad 11 und einem dritten Umlenkrad 12 verläuft das Transportband 1 im Ausführungsbeispiel in horizontaler Richtung. Nach dem Passieren des dritten Umlenkrades 12 folgt das Transportband 1 einem geradlinig ansteigenden Bahnabschnitt bis zum Erreichen eines vierten Umlenkrades 13, welches das Transportband 1 in den oberen horizontalen Bahnabschnitt umlenkt.

Die Sammeleinrichtung 8 weist, wie insbesondere Fig. 3 zeigt, zwei im Abstand nebeneinander angeordnete und parallel zueinander verlaufende, endlose Bänder 14 auf, deren Abstand voneinander größer ist als die quer zur Laufrichtung gemessene Breite des Transportbandes 1, da letzteres in dem abfallenden Bahnabschnitt zwischen den beiden endlosen Bändern 14 hindurchgeführt ist. Die endlosen Bänder 14 sind über zwei gleichachsig angeordnete hintere Umlenkrollen 15 und zwei nicht dargestellte, ebenfalls gleichachsig angeordnete vordere Umlenkrollen geführt. Die Achsen dieser Umlenkrollen liegen parallel zu den Achsen der Umlenkräder 10 bis 13. Wie vor allem Fig. 1 erkennen läßt, verläuft das obere Trum der beiden endlosen Bänder 14 von der hinteren Umlenkrolle 15 zur vorderen Umlenkrolle leicht ansteigend, wobei diese Steigung so gewählt ist, daß die Querwände 5 in dem die Sammeleinrichtung 8 kreuzenden Bahnabschnitt ungefähr senkrecht zum oberen Trum der endlosen Bänder 14 verlaufen. Letztere bilden mit ihrem oberen Trum je eine Abstellzone 16 für die auf den endlosen Bändern 14 zu bildenden Gruppen von Beuteln 7.

Von den beiden endlosen Bändern 14 stehen Anschlagfinger 17 ab, wobei je zwei in Querrichtung der endlosen Bänder 14 aufeinander ausgerichtet sind und eine Anlagefläche für den ersten Beutel einer Gruppe bilden. Da die Beutel 7 innerhalb der zu bildenden Gruppe mit einem gewissen Druck aneinander anliegen sollen, kann das obere Trum der beiden endlosen Bänder 14, deren Umlenkrollen drehfest miteinander verbunden sind, damit beide endlose Bänder 14 sich nur synchron bewegen können, nur unter Überwindung einer hemmenden Kraft vom Transportband 1 weg, also bei einer Blickrichtung gemäß Fig. 1 von links nach rechts, bewegt werden. Die für diese Bewegung erforderliche Kraft wird dadurch erzeugt, daß an das hintere Ende der Gruppe durch das Transportband 1 zwangsläufig ein Beutel 7 nach dem anderen angefügt wird.

Da das Transportband 1 die beiden endlosen Bänder 14 kreuzt und sich dabei von oben nach unten bewegt, werden die sich in den Fächern 6 befindenden Beutel 7 nacheinander auf den beiden endlosen Bändern 14 abgestellt. Dadurch, daß dabei die dem jeweiligen Beutel 7 vorauseilende Querwand 5 den als nächsten abzustellenden Beutel 7 von dem vorausgehenden, auf den Abstellzonen 16 bereits abgestellten Beuteln 7 trennt, ist sichergestellt, daß jeder Beutel 7 bis zur Auflage auf den Abstellzonen 16 vom Transportband 1 transportiert wird, auch wenn infolge des in dem bereits gebildeten Teil der Gruppe herrschenden Druckes die Querwand 5 dann, wenn sie in Anlage an den zuletzt abgestellten Beutel 7 kommt, gegen den nächst folgenden Beutel 7 gedrückt wird. Erst wenn der Beutel 7 auf den Abstellzonen 16 abgestellt ist und damit auch dieser Beutel 7 ordnungsgemäß auf die bereits abgestellten Beutel ausgerichtet ist, hat die weitere Bewegung des Transportbandes 1 nach unten zur Folge, daß die Querwand 5 nach unten aus dem Gruppenende herausgezogen wird.

Da innerhalb der gebildeten Gruppe ein gewisser Druck zwischen den Beuteln 7 in der Gruppenlängsrichtung herrscht, ist es notwendig, den letzten Beutel 7 jeder Gruppe abzustützen. Für diese Abstützung sind Mitnehmer vorgesehen, die analog zu den Anschlagfingern 17 aus je zwei Mitnehmerfingern 18 bestehen, welche wie die Anschlagfinger 17 aufeinander ausgerichtet sind. Diese Paare von Mitnehmerfingern 18 stehen von zwei endlosen, synchron angetriebenen Förderbändern 19 ab, die außen neben dem einen bzw. anderen endlosen Band 14 angeordnet sind, und zwar derart, daß die Oberseite ihres oberen Trums in derselben Ebene liegt wie die Oberseite des oberen Trums der endlosen Bänder 14. Im Ausführungsbeispiel liegt auch das untere Trum der Förderbänder 19 und der endlosen Bänder 14 in einer gemeinsamen Ebene und außerdem sind vordere und hintere Umlenkrollen gleichachsig zu den Umlenkrollen der endlosen Bänder 14 angeordnet.

Die Laufgeschwindigkeit der Förderbänder 19 ist so auf die Laufgeschwindigkeit des Transportbandes 1 abgestimmt, daß die Mitnehmerfinger 18 in Anlage an das hintere Ende der zuletzt gebildeten Gruppe von Beuteln 7 kommen, wenn die Gruppe die vorgeschriebene Anzahl von Beuteln 7 aufweist. Da in der Regel ein gewisser Abstand zwischen zwei aufeinander folgenden Gruppen erwünscht ist, wie dies Fig. 1 zeigt, wird ferner die Beschickung des Transportbandes 1 mit den Beuteln 7 so gesteuert, daß nach dem letzten Beutel einer Gruppe einige, beispielsweise zwei oder drei, Fächer 6 unbeschickt bleiben. Dementsprechend können die Anschlagfinger 17 in einem gewissen Abstand den unmittelbar vorausgehenden Mitnehmerfingern 18 folgen, wie dies Fig. 1 zeigt.

Die weitere Handhabung der gebildeten Gruppen kann in verschiedener Weise erfolgen. Beispielsweise können die Gruppen quer zur Laufrichtung der endlosen Bänder 14 und der Förderbänder 19, welche auch einen Teil der Abstellzonen bilden, abgenommen werden.

Die Beschickung der Fächer 6 mit den Beuteln 7 erfolgt im Bereich des Überganges des Transportbandes 1 von dem durch das vierte Umlenkrad 13 bestimmten Bahnabschnitt zu dem oberen horizontalen Bahnabschnitt. Hier kommen nämlich nacheinander alle Querwände 5 in eine horizontale Lage, wie dies Fig. 1 erkennen läßt. Deshalb wird das Transportband 1 in diesem Bereich zwischen zwei parallel und im Abstand nebeneinander angeordneten Zuführbändern 20 hindurchgeführt, die synchron angetrieben sind und mit ihrem oberen Trum eine horizontale Auflagefläche für die Beutel 7 bilden, die in Laufrichtung hintereinander auf den Zuführbändern 20 liegen. Um eine zwangsläufige Mitnahme der Beutel 7 zu gewährleisten, können die Zuführbänder 20 Mitnahmeelemente 21 tragen.

Die Laufgeschwindigkeit der Zuführbänder 20 ist auf die Laufgeschwindigkeit des Transportbandes 1 abgestimmt. Da die Beutel 7 von den Zuführbändern 20 nur innerhalb der Zeitspanne in die Fächer 6 eingeführt werden können, während deren das obere Trum der Zuführbänder 20 auf den Raum zwischen zwei aufeinander folgenden Querwänden 5 ausgerichtet ist, ist es zweckmäßig, die Zuführbänder 20 schrittweise mit einer höheren Geschwindigkeit als der Laufgeschwindigkeit des Transportbandes 1 anzutreiben. Weil sich, wie Fig. 1 zeigt, die Zuführbänder 20 in den oberen, horizontalen Bahnabschnitt des Transportbandes 1 hinein erstrecken, ist sichergestellt, daß die Beutel 7 vollständig in die Fächer 6 eingeführt werden.

Die das zweite Ausführungsbeispiel bildende Vorrichtung zur Gruppierung von eine Ware enthaltenden Beuteln oder dergleichen weist ein endloses, als Ganzes mit 101 bezeichnetes Transportband mit einer Rollenkette 102 auf, von dem nur ein kurzes Stück dargestellt ist. An den die aufeinanderfolgenden Rollen verbindenden Wangen der Rollenkette 102 sind Halter 104 befestigt, und zwar auf der nach außen weisenden Seite. Bei diesen Haltern 104 handelt es sich im Ausführungsbeispiel um gleich ausgebildete, blockförmige Klemmvorrichtungen. An jeder dieser Klemmvorrichtungen ist das eine, schmalseitige Ende je einer rechteckförmigen Querwand 105 aus einem dünnen, federnden Material festgeklemmt. Die Querwände 105 haben die Form von Zungen, welche in Richtung der Rollenkette 102 vom jeweiligen Halter 104 unter Bildung eines spitzen Winkels abstehen, wobei der Winkel sich entgegen der Laufrichtung des Transportbandes 101 öffnet. Die Querwände 105 bilden in Längsrichtung des Transportbandes 101 aufeinanderfolgende Fächer 106 zur Aufnahme je eines der zu gruppierenden Beutel 107. Die Weite der Fächer 106 ist, wenn auf die Querwände kein Druck ausgeübt wird, zumindest ungefähr gleich dem Sollwert der Dicke der Beutel 107. Sie ist jedoch infolge der Biegsamkeit der Querwände 105 in Richtung der Fächerreihe variabel, weshalb auch Beutel 107 mit einer größeren Dicke eingeführt werden können. Dank dieser federnden Querwände 105 und deren Höhe, die größer ist als die halbe Höhe der Beutel 107 und im Ausführungsbeispiel sogar größer ist als die Beutelhöhe, wird in den Fächern 106 auf die Beutel 107 ein Druck ausgeübt, der die Beutel 107 flach hält, also verhindert, daß die in ihnen enthaltene Ware sich im unteren Teil des Beutels ansammelt.

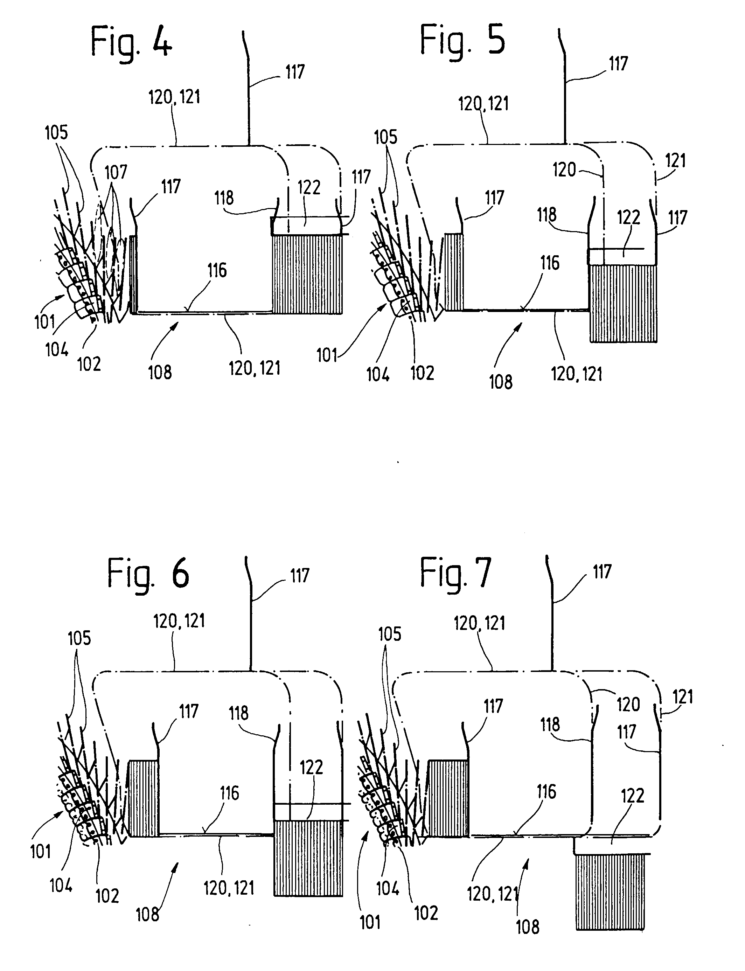

Das Transportband 101, das sich längs einer Zufuhreinrichtung bewegt, in welcher die Beutel 107 einzeln in die Fächer 106 liegend eingeführt werden, bewegt sich danach, wie die Fig. 4 bis 11 zeigen, längs einer abfallenden Bahn, so daß die Beutel 107 zumindest nahezu vertikal stehend einer als Ganzes mit 108 bezeichneten Sammeleinrichtung zugeführt werden. Diese Sammeleinrichtung 108 weist eine Abstellfläche 116 auf, welche sich vom Transportband 101 weg erstreckt. Auf diese Abstellfläche 116, welche zwei nicht dargestellte Finger aufweist, zwischen denen die Rollenkette 102 hindurchgeführt ist, werden nacheinander zumindest im wesentlichen lotrecht stehend die Beutel 107 abgestellt.

Der jeweils erste Beutel 107 der in der Sammeleinrichtung 108 zu bildenden Gruppen oder Stapel legt sich an eine geschobene Platte 117 an, die von dem sich bildenden Stapel, im Ausführungsbeispiel in horizontaler Richtung, zu demjenigen Ende der Sammeleinrichtung 108 geschoben werden kann, an dem der fertige Stapel von der Sammeleinrichtung 108 entnommen wird. Im Ausführungsbeispiel weist die Sammeleinrichtung 108 drei gleich ausgebildete geschobene Platten 117 auf, welche in Abständen voneinander an einer ersten Transportkette 120 derart befestigt sind, daß sie von dieser in vertikaler Richtung nach oben abstehen. Die erste Transportkette 120 verläuft, wie die Figuren zeigen, längs der Abstellfläche 116 und dann an deren Ende vertikal nach oben. Hieran schließt sich ein parallel zur Abstellfläche 116 verlaufender Abschnitt an, dessen Abstand von der Abstellfläche 116 größer ist als die Höhe der Beutel 107. An diesen letztgenannten Abschnitt schließt sich ein Abschnitt an, dessen Erstreckungsrichtung zunächst außer einer Komponente nach unten eine solche in der Bewegungsrichtung der Beutel 107 auf der Abstellfläche 116 hat. Erst gegen Ende dieses Abschnittes verläuft die erste Transportkette 120 in vertikaler Richtung zur Abstellfläche 116.

Außer den drei geschobenen Platten 117 weist im Ausführungsbeispiel die Sammeleinrichtung 108 noch eine schiebende Platte 118 auf, die an einer zweiten Transportkette 121 so angeordnet ist, daß sie von dieser stets vertikal nach oben absteht. Bis auf denjenigen Abschnitt, in welchem die geschobene Platte 118 vertikal nach oben transportiert wird, nachdem der fertige Stapel von der Sammeleinrichtung 108 entnommen worden ist, decken sich die Bahnen der ersten und zweiten Transportkette 120 bzw. 121. Die zweite Transportkette 121 verläuft im Abstand vor der ersten Transportkette 120 vertikal nach oben.

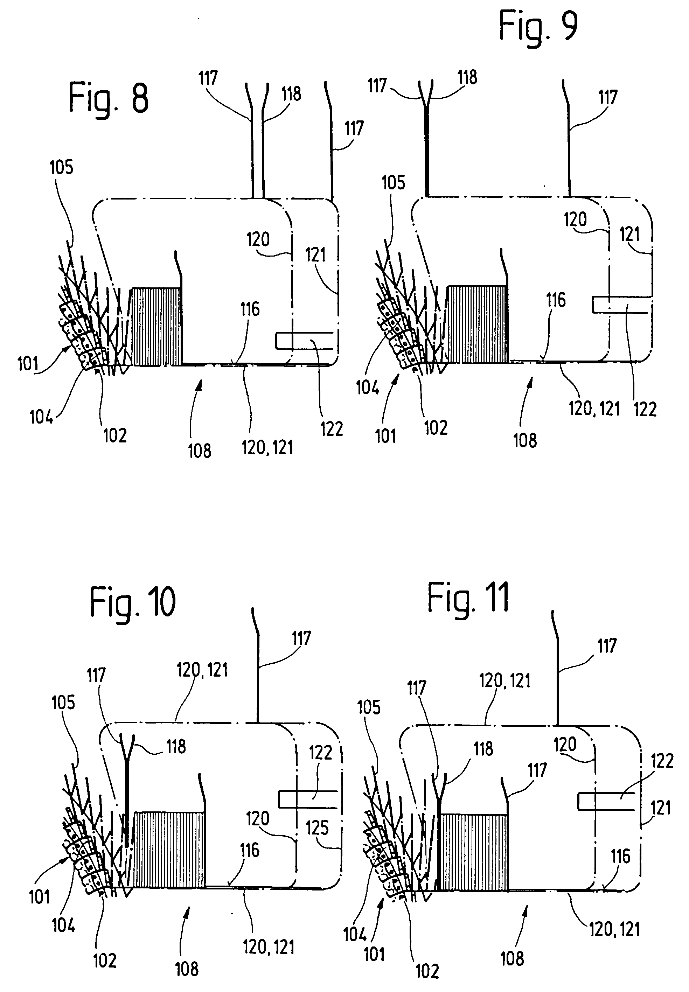

Wie die Fig. 4 bis 7 zeigen, wird der fertige Stapel während der Bildung des folgenden Stapels mittels eines in vertikaler Richtung bewegbaren Auswerfers 122 nach unten zu einer Verpackungsstation bewegt, wobei die geschobene Platte 117 und die Schubplatte 118 ihre Position beibehalten. Danach werden, wie Fig. 5 zeigt, sowohl die geschobene Platte 117 als auch die schiebende Platte 118 vertikal nach oben bewegt. Außerdem wird die Schubplatte 118 mehr und mehr an die vorausgehende geschobene Platte 117 heranbewegt, bis sie an dieser in Anlage ist, wie Fig. 9 zeigt. Während dieser Zeit wird die Bildung des nächsten Stapels fortgesetzt. Während sich die Schubplatte 118 und die an ihr anliegende geschobene Platte 117 nach unten bewegen, wird die Stapelbildung beendet. Die geschobene Platte 117 und die an ihr anliegende Schubplatte 118 tauchen dann gemeinsam von oben her zwischen den letzten Beutel des Stapels und den ersten Beutel des als nächsten zu bildenden Stapels vollständig ein, wie Fig. 11 zeigt. Unmittelbar danach schiebt die Schubplatte 118 mit einer Geschwindigkeit, die wesentlich größer ist als die Geschwindigkeit, mit welcher die geschobene Platte 117 von dem sich bildenden Stapel geschoben wird, in die Endstellung, in welcher der Auswerfer 122 den Stapel nach unten schiebt. Während dieser Schubbewegung durch die Schubplatte 118 wird auf die Beutel des gebildeten Stapels ein ausreichend großer Druck ausgeübt, so daß alle Beutel ihre Form beibehalten. Die Höhe des auftretenden Druckes kann durch die Kraft festgelegt werden, mit welcher die Bewegung der geschobenen Platte 117 gebremst wird, während sie vom Stapel geschoben wird.

Um unterschiedliche Transportgeschwindigkeiten der geschobenen Platten 117 zu ermöglichen, sind diese mit der zugeordneten ersten Transportkette 120 nur kraftschlüssig verbunden.

## Patentansprüche

1. Vorrichtung zur Gruppierung von Ware enthaltenden Beuteln (7; 107), die in einer stehenden Anordnung auf einer Abstellfläche einer Sammeleinrichtung (8; 108) unter Bildung einer Gruppe abstellbar sind, innerhalb der die Beutel (7; 107) bei der Gruppierung mit Druck aneinander anliegen, wobei
a) ein Transportband (1; 101) vorgesehen ist, das von oben nach unten an der Abstellfläche vorbeiführbar ist,
b) das Transportband (1; 101) in Bandlängsrichtung aufeinander folgende Fächer (6) aufweist, die durch je eine vom Transportband (1; 101) abstehende und quer zur Bandlängsrichtung verlaufende Querwand (5; 105) voneinander getrennt sind und der Aufnahme je eines der Beutel (7; 107) dienen,
c) jede Querwand (5; 105) eine Trennwand zwischen dem ihr unmittelbar folgenden Beutel (7; 107) und dem zuletzt auf der Abstellfläche abgestellten Beutel (7; 107) bildet, bis ersterer ebenfalls auf der Abstellfläche abgestellt ist, und
d) jede Querwand (5; 105) nach dem Abstellen des ihr unmittelbar folgenden Beutels zur Abstellfläche nach unten aus dem Gruppenende herausbewegbar ist,
dadurch gekennzeichnet,
e) daß jede Querwand (5; 105) durch eine in der Laufrichtung des Transportbandes (1; 101) federnde Platte gebildet ist,
f) daß die Sammeleinrichtung (8; 108) wenigstens einen Mitnehmer (18; 118) aufweist, der an das hintere Ende der gebildeten Gruppe anlegbar ist und
g) daß in der Sammeleinrichtung (8; 108) die gebildete Gruppe in Gruppenlängsrichtung unter Bildung eines beutelfreien Zwischenraumes von dem nachfolgenden Beutel der nächsten Gruppe wegbewegbar ist.

2. Vorrichtung nach Anspruch 1 mit Beuteln, die aus Einzelteilen bestehende Ware enthalten, dadurch gekennzeichnet, daß der Abstand unmittelbar aufeinander folgender Querwände (5; 105) zumindest annähernd dem Sollwert der Dicke der Beutel (7; 107) entspricht.

3. Vorrichtung nach Anspruch 1 oder 2, dadurch gekennzeichnet, daß das Transportband (1; 101) eine Gliederkette (2; 102) aufweist, an deren Glieder Halter (4; 104) festgelegt sind, an denen das bandseitige Ende der Querwände (5; 105) befestigt ist.

4. Vorrichtung nach Anspruch 3, dadurch gekennzeichnet, daß die Gliederkette (2; 102) als Rollenkette ausgebildet ist.

5. Vorrichtung nach einem der Ansprüche 1 bis 4, dadurch gekennzeichnet, daß das Transportband (1; 101) in demjenigen Bereich, in dem in seine Fächer (6) die Beutel (7; 107) eingeführt werden, zwischen zwei im Abstand nebeneinander verlaufenden Förderbändern (20) hindurchgeführt ist und daß in dem zwischen den Förderbändern (20) hindurchgeführten Abschnitt des Transportbandes (1; 101) sich die Querwände (5; 105) zumindest annähernd in der Transportrichtung der Förderbänder (20) erstrecken.

6. Vorrichtung nach einem der Ansprüche 1 bis 5, dadurch gekennzeichnet, daß die Querwände (5) einen spitzen, sich entgegen der Laufrichtung des Transportbandes (1) öffnenden Winkel mit dem Transportband (1) einschließen und daß die Querwände (5) in den an der Abstellfläche (16) vorbeigeführten Bahnabschnitt zumindest annähernd im rechten Winkel zu der Abstellfläche (16) verlaufen.

7. Vorrichtung nach Anspruch 6, dadurch gekennzeichnet, daß der an der Abstellfläche (16) vorbeigeführte Abschnitt des Transportbandes (1) einer geradlinigen Bahn folgt.

8. Vorrichtung nach einem der Ansprüche 1 bis 7, dadurch gekennzeichnet, daß die Abstellfläche der Sammeleinrichtung (8; 108) unter Freilassung einer Mittelzone in zwei nebeneinander angeordnete Abstellzonen (16; 116) unterteilt ist und das Transportband (1; 101) die Abstellzonen (16; 116) kreuzend durch die Mittelzone hindurchgeführt ist.

9. Vorrichtung nach einem der Ansprüche 1 bis 8, dadurch gekennzeichnet, daß die Sammeleinrichtung (8; 108) wenigstens einen Anschlag (17; 117) mit einer Anschlagfläche für den ersten Beutel (7; 107) jeder Gruppe aufweist, der in Richtung der Gruppenlänge unter Überwindung einer hemmenden Kraft von der Gruppe verschiebbar ist.

10. Vorrichtung nach Anspruch 9, dadurch gekennzeichnet, daß jeder Anschlag aus zwei Anschlagfingern (17) besteht, die von zwei zu beiden Seiten der Mittelzone verlaufenden, endlosen Bändern (14) abstehen.

11. Vorrichtung nach Anspruch 10, dadurch gekennzeichnet, daß die beiden endlosen Bänder (14) zumindest einen Teil der Abstellzonen (16) bilden.

12. Vorrichtung nach einem der Ansprüche 1 bis 11, dadurch gekennzeichnet, daß jeder vorhandene Mitnehmer zwei Mitnehmerfinger (18) aufweist, die an zwei neben den die Anschlagfinger (17) tragenden endlosen Bändern (14) zu beiden Seiten der Mittelzone vorgesehen, endlosen, synchron angetriebenen Förderelementen (20) angeordnet sind.

13. Vorrichtung nach einem der Ansprüche 1 bis 9, dadurch gekennzeichnet, daß die Sammeleinrichtung (108) in der Bewegungsrichtung der auf der Abstellfläche (116) abgestellten Beutel (107) bewegbare Anschlagelemente (117), an denen der jeweils erste Beutel (107) jeder Gruppe anliegt, und wenigstens ein in gleicher Richtung bewegbares Schubelement (118) aufweist, das sich an den letzten Beutel (107) jeder Gruppe anlegt und die Beutel (107) der Gruppe in Anlage aneinander hält, bis die Gruppe als Ganzes die Sammeleinrichtung (108) verläßt, wobei sowohl die Anschlagelemente (117) als auch jedes vorhandene Schubelement (118) von dem der Abstellfläche (116) abgewandten Beutelrand her zwischen die Beutel (107) eingeführt und in der entgegengesetzten Richtung wieder vom Stapel nach dessen Bildung entfernt wird.

14. Vorrichtung nach Anspruch 13, dadurch gekennzeichnet, daß jeweils ein Anschlagelement (117) und ein Schubelement (118) gemeinsam zwischen zwei aufeinanderfolgende Beutel (107) eingeführt werden.

15. Vorrichtung nach Anspruch 13 oder 14, dadurch gekennzeichnet, daß die Anschlagelemente (117) an einer ersten und jedes vorhandene Schubelement (118) an einer zweiten längs einer in sich geschlossenen Bahn verlaufenden Transporteinrichtung (120, 121) angeordnet sind.

16. Vorrichtung nach Anspruch 15, dadurch gekennzeichnet, daß je ein erster Abschnitt jeder Transporteinrichtung (120, 121) längs der Abstellfläche (116) und je ein zweiter Abschnitt parallel zum ersten Abschnitt in einem Abstand oberhalb der Abstellfläche (116) angeordnet ist, der größer ist als die Höhe der auf der Abstellfläche (116) abzustellenden Beutel (107).

17. Vorrichtung nach Anspruch 16, gekennzeichnet durch einen das Ende des zweiten Abschnittes mit dem Anfang des ersten Abschnittes verbindenden dritten Abschnitt der Transporteinrichtungen (120, 121), der außer einer Komponente seiner Transportrichtung lotrecht zur Abstellfläche (116) eine Komponente in der Bewegungsrichtung der Beutel (107) auf der Stellfläche (114) aufweist.

18. Vorrichtung nach einem der Ansprüche 13 bis 17, dadurch gekennzeichnet, daß die Transporteinrichtungen als endlose Bänder und/oder Ketten (120, 121) ausgebildet sind.

19. Vorrichtung nach einem der Ansprüche 13 bis 18, dadurch gekennzeichnet, daß sowohl die Anschlagelemente (117) als auch jedes Schubelement (118) als Platte ausgebildet sind.

## Claims

1. Apparatus for the grouping of bags (7; 107) which contain goods and which can be deposited in an upright arrangement on a deposit area of a collection device (8; 108) to form a group within which the bags (7; 107) rest against one another with pressure during the grouping, wherein
a) a transport belt (1; 101) is provided and can be guided downwards past the deposit area,
b) the transport belt (1; 101) has, in the longitudinal direction of the belt, successive compartments (6) which are separated from each other by a transverse wall (5; 105), which projects from the transport belt (1; 101) and which extends transversely to the longitudinal direction of the belt, and which are used to receive one of the bags (7; 107) each,
c) each transverse wall (5; 105) forms a partition wall between the bag (7; 107), which directly follows it, and the bag (7; 107), which was last deposited on the deposit area, until the former is also deposited on the deposit area, and
d) each transverse wall (5; 105) can be moved out of the end of the group downwards relative to the deposit area once the bag which directly follows it has been deposited,
characterised in that
e) each transverse wall (5; 105) is formed by a plate which is resilient in the travel direction of the transport belt (1; 101),
f) the collection device (8; 108) has at least one carrier (18; 118) which can be placed against the rear end of the group formed and
g) in the collection device (8; 108), the group formed can be moved away from the following bag of the next group in the longitudinal direction of the group with formation of a bag-free intermediate space.

2. Apparatus according to claim 1 having bags which contain goods comprising individual elements, characterised in that the spacing of transverse walls (5; 105) in direct succession to one another corresponds at least approximately to the desired value of the thickness of the bags (7; 107).

3. Apparatus according to claim 1 or 2, characterised in that the transport belt (1; 101) has a link chain (2; 102), to the links of which holders (4; 104) are fixed, to which the end, arranged on the belt side, of the transverse walls (5; 105) is attached.

4. Apparatus according to claim 3, characterised in that the link chain (2; 102) is in the form of a roller chain.

5. Apparatus according to any one of claims 1 to 4, characterised in that the transport belt (1; 101), in the region in which the bags (7; 107) are introduced into the compartments (6) thereof, is guided between two conveyor belts (20) which extend with spacing from one another, and in that the transverse walls (5; 105) extend at least approximately in the transport direction of the conveyor belts (20) in the portion, guided between the conveyor belts (20), of the transport belt (1; 101).

6. Apparatus according to any one of claims 1 to 5, characterised in that the transverse walls (5) enclose, with the transport belt (1), an acute angle, which opens counter to the travel direction of the transport belt (1), and in that the transverse walls (5) extend at least approximately at right-angles to the deposit area (16) in the path portion which is guided past the deposit area (16).

7. Apparatus according to claim 6, characterised in that the portion, guided past the deposit area (16), of the transport belt (1) follows a straight path.

8. Apparatus according to any one of claims 1 to 7, characterised in that the deposit area of the collection device (8; 108) is subdivided, whilst leaving free a central region, into two adjacent deposit regions (16; 116) and the transport belt (1; 101) is guided through the central region and intersects with the deposit regions (16; 116).

9. Apparatus according to any one of claims 1 to 8, characterised in that the collection device (8; 108) has at least one stop (17; 117), which has a stop face for the first bag (7; 107) of each group and which, overcoming a restraining force, can be displaced by the group in the direction of the length of the group.

10. Apparatus according to claim 9, characterised in that each stop comprises two stop fingers (17) which protrude from two endless belts (14) which extend on both sides of the central region.

11. Apparatus according to claim 10, characterised in that the two endless belts (14) form at least a portion of the deposit regions (16).

12. Apparatus according to any one of claims 1 to 11, characterised in that each carrier present has two carrier fingers (18) which are arranged on two endless, synchronously driven conveyor elements (20) provided beside the endless belts (14), carrying the stop fingers (17), at both sides of the central region.

13. Apparatus according to any one of claims 1 to 9, characterised in that the collection device (108) has stop elements (117), which are movable in the direction of movement of the bags (107), deposited on the deposit area (116), and against which the first bag (107) of each group rests, and at least one pushing element (118), which is movable in the same direction and which presses against the last bag (107) of each group and holds the bags (107) of the group in contact against one another until the group as a whole leaves the collection device (108), both the stop elements (117) and each pushing element (118) present being introduced between the bags (107) starting from the edge of the bag remote from the deposit area (116) and, in the opposite direction, being withdrawn once more from the stack after formation thereof.

14. Apparatus according to claim 13, characterised in that one stop element (117) and one pushing element (118) are introduced jointly between two successive bags (107).

15. Apparatus according to claim 13 or 14, characterised in that the stop elements (117) are arranged on a first transport device (120, 121), which extends along a self-contained path, and each pushing element (118) present is arranged on a second transport device (120, 121), which extends along a self-contained path.

16. Apparatus according to claim 15, characterised in that a first portion of each transport device (120, 121) is arranged along the deposit area (116) and a second portion is arranged parallel with the first portion above the deposit area (116) with spacing which is greater than the height of the bags (107) to be deposited on the deposit area (116).

17. Apparatus according to claim 16, characterised by a third portion of the transport devices (120, 121), which connects the end of the second portion to the start of the first portion and which has, in addition to a component of its transport direction perpendicular to the deposit area (116), a component in the direction of movement of the bags (107) on the positioning area (114).

18. Apparatus according to any one of claims 13 to 17, characterised in that the transport devices are in the form of endless belts and/or chains (120, 121).

19. Apparatus according to any one of claims 13 to 18, characterised in that both the stop elements (117) and each pushing element (118) are in the form of a plate.

## Revendications

1. Dispositif destiné à grouper des sachets contenant des marchandises, qui peuvent être déposés en position verticale sur une surface de pose d'un collecteur en formant un groupe, à l'intérieur duquel les sachets sont en contact les uns avec les autres par pression au moment du groupement, dans lequel dispositif
a) il est prévu une courroie de transport (1 ; 101) qui se déplace du haut vers le bas en passant près de la surface de pose,
b) la courroie de transport (1 ; 101) comporte des compartiments (6), placés les uns derrière les autres dans le sens long de la courroie, qui sont séparés les uns des autres chacun par une cloison transversale (5 ; 105), en saillie sur la courroie de transport (1 ; 101) et orientée dans le sens transversal de la courroie, et qui sont destinés à recevoir chacun l'un des sachets (7 ; 107),
c) chaque cloison transversale (5 ; 105) forme une cloison de séparation entre le sachet (7 ; 107) directement derrière celle-ci et le sachet (7 ; 107) déposé en dernier sur la surface de pose, jusqu'à ce que le sachet cité en premier lieu soit également déposé sur la surface de pose, et
d) chaque cloison transversale (5 ; 105) peut être déplacée hors de l'extrémité du groupe vers le bas par rapport à la surface de pose, une fois que le sachet placé directement derrière ladite cloison transversale a été déposé,
caractérisé en ce que
e) chaque cloison transversale (5 ; 105) est formée par une languette flexible dans le sens de transport de la courroie de transport (1 ; 101),
f) le collecteur (8 ; 108) comporte au moins un poussoir (18 ; 118), qui peut venir en appui contre l'extrémité arrière du groupe formé, et
g) dans le collecteur (8 ; 108), le groupe formé peut être transporté plus loin dans le sens long du groupe en formant un intervalle sans sachet par rapport au sachet consécutif du groupe suivant.

2. Dispositif selon la revendication 1 avec des sachets contenant de la marchandise formée par des pièces en vrac, caractérisé en ce que la distance entre deux cloisons transversales (5 ; 105) directement consécutives est au moins approximativement égale à la valeur de consigne de l'épaisseur des sachets (7 ; 107).

3. Dispositif selon la revendication 1 ou 2, caractérisé en ce que la courroie de transport (1 ; 101) comporte une chaîne à maillons (2 ; 102), sur les maillons de laquelle sont fixés des supports (4 ; 104) contre lesquels est fixée l'extrémité, du côté de la courroie, des cloisons transversales (5 ; 105).

4. Dispositif selon la revendication 3, caractérisé en ce que la chaîne à maillons (2 ; 102) peut être conçue en forme de chaîne à rouleaux.

5. Dispositif selon l'une quelconque des revendications 1 à 4, caractérisé en ce que la courroie de transport (1 ; 101), dans la zone dans laquelle les sachets (7 ; 107) sont insérés dans ses compartiments (6), est guidée entre deux tapis roulants (20) disposés à une distance donnée l'un à côté de l'autre, et en ce que, dans le tronçon de la courroie de transport (1 ; 101) guidée entre les deux tapis roulants (20), les cloisons transversales (5 ; 105) s'étendent au moins approximativement dans le sens de transport des tapis roulants (20).

6. Dispositif selon l'une quelconque des revendications 1 à 5, caractérisé en ce que les cloisons transversales (5) forment avec la courroie de transport (1) un angle aigu qui s'ouvre dans le sens inverse du sens de transport de la courroie de transport (1) et en ce que les cloisons transversales (5) forment avec la surface de pose (16) au moins approximativement un angle droit, dans le tronçon guidé le long de la surface de pose (16).

7. Dispositif selon la revendication 6, caractérisé en ce que le tronçon de la courroie de transport (1) guidé le long de la surface de pose (16) suit une voie rectiligne.

8. Dispositif selon l'une quelconque des revendications 1 à 7, caractérisé en ce que la surface de pose du collecteur (8 ; 108) est séparée en deux zones de dépose (16 ; 116), qui sont disposées l'une à côté de l'autre en laissant entre elles une zone centrale, et la courroie de transport (1 ; 101) est guidée dans la zone centrale en croisant les zones de dépose (16 ; 116).

9. Dispositif selon l'une quelconque des revendications 1 à 8, caractérisé en ce que le collecteur (8 ; 108) est muni d'au moins une butée (17 ; 117) avec une surface d'appui pour le premier sachet (7 ; 107) de chaque groupe, laquelle butée peut être déplacée par le groupe dans le sens long du groupe en surmontant une force de blocage.

10. Dispositif selon la revendication 9, caractérisé en ce que chaque butée est formée par deux taquets de butée (17) qui forment une saillie sur deux bandes transporteuses continues (14) et sont prévus de part et d'autre de la zone centrale.

11. Dispositif selon la revendication 10, caractérisé en ce que les deux bandes transporteuses continues (14) forment au moins une partie des zones de dépose (16).

12. Dispositif selon l'une quelconque des revendications 1 à 11, caractérisé en ce que chaque poussoir est formé par deux taquets de poussée (18) qui sont disposés sur deux éléments de transport continus (20), qui sont actionnés dans un mouvement synchrone et sont prévus de part et d'autre de la zone centrale à côté des bandes transporteuses continues (14) munies des taquets de butée (17).

13. Dispositif selon l'une quelconque des revendications 1 à 9, caractérisé en ce que le collecteur (108) comporte des éléments de butée (117) mobiles dans le sens de déplacement des sachets (107) déposés sur la surface de pose (116), contre lesquels éléments de butée vient en appui respectivement le premier sachet (107) de chaque groupe, et au moins un élément de poussée (118) mobile dans le même sens, qui vient en appui contre le dernier sachet (107) de chaque groupe et maintient les sachets (107) du groupe en appui l'un contre l'autre, jusqu'à ce que le groupe dans son ensemble soit évacué hors du collecteur (108), dans lequel non seulement les éléments de butée (117), mais aussi chaque élément de poussée (118) existant sont insérés entre les sachets (107) à partir du bord du sachet opposé à la surface de pose (116) et sont à nouveau éloignés de la pile dans le sens opposé après la formation de celle-ci.

14. Dispositif selon la revendication 13, caractérisé en ce que chaque élément de butée (117) et un élément de poussée (118) sont insérés ensemble entre deux sachets (107) successifs.

15. Dispositif selon la revendication 13 ou 14, caractérisé en ce que les éléments de butée (117) sont disposés dans un premier dispositif de transport (120) et chaque élément de poussée (118) existant est disposé sur un deuxième dispositif de transport (121), lesquels dispositifs de transport se déplacent le long d'une voie fermée en soi.

16. Dispositif selon la revendication 15, caractérisé en ce que chaque premier tronçon de chaque dispositif de transport (120, 121) est disposé le long de la surface de pose (116), et chaque deuxième tronçon est parallèle au premier tronçon et disposé au-dessus de la surface de pose (116) à une distance donnée, qui est supérieure à la hauteur des sachets à déposer (107) sur la surface de pose (116).

17. Dispositif selon la revendication 16, caractérisé par un troisième tronçon des dispositifs de transport (120, 121), qui relie la fin du deuxième tronçon avec le début du premier tronçon et qui, à l'exception d'une composante de son sens de transport perpendiculaire à la surface de pose (116), comporte une composante dans le sens de déplacement des sachets (107) sur la surface de pose (114).

18. Dispositif selon l'une quelconque des revendications 13 à 17, caractérisé en ce que les dispositifs de transport sont conçus en forme de bandes continues et/ou de chaînes continues (120, 121).

19. Dispositif selon l'une quelconque des revendications 13 à 18, caractérisé en ce que non seulement les éléments de butée (117), mais aussi chaque élément de poussée (118) sont conçus en forme de plaquettes.
